# EUROPEAN PATENT APPLICATION

(11) **EP 4 618 297 A1**
(43) Date of publication of application: **17.09.2025**
(21) Application number: 24845904.2
(22) Date of filing: 16.07.2024
(51) Int. Cl.: H01M 50/489, H01M 50/446, H01M 50/449, H01M 50/403, H01M 50/107

(54) **SEPARATOR SUBSTRATE, PREPARATION METHOD THEREOF, AND SEPARATOR INCLUDING SAME**

(30) Priority: 21.07.2023 KR 20230095292
(71) Applicant: LG Energy Solution, Ltd., Seoul 07335 (KR)
(72) Inventor: LEE, So-Yeong, Daejeon 34122 (KR); BAE, Kyeong-Hui, Daejeon 34122 (KR); BAE, Won-Sik, Daejeon 34122 (KR); BAK, Byeong-Chan, Daejeon 34122 (KR)
(74) Representative: Hoffmann Eitle
(86) International application number: PCT/KR2024/010211
(87) International publication number: WO 2025/023601

(57) **Abstract**

The present disclosure relates to a separator substrate, a separator, an electrode assembly and an electrochemical device, and the separator substrate according to an embodiment of the present disclosure has a predetermined range of surface roughness Sa. Accordingly, the separator using the same maintains high adhesion strength, and has improved wear resistance.

## Description

### TECHNICAL FIELD

The present disclosure relates to a separator substrate, a method for preparing the same and a separator including the same. More particularly, the present disclosure relates to a separator with improved adhesion strength and wear resistance characteristics, and an electrode assembly and an electrochemical device including the same.

The present application claims priority to Korean Patent Application No. 2023-0095292 filed on July 21, 2023 in the Republic of Korea, the disclosure of which is incorporated herein by reference.

### BACKGROUND

A lithium secondary battery is manufactured through a process of inserting an electrode assembly including a positive electrode/a separator/a negative electrode into a battery case, injecting an electrolyte solution and sealing the battery case. The separator for use in the lithium secondary battery generally includes a polyolefin-based porous substrate, and to solve the short-circuit problem of the positive electrode and the negative electrode by the thermal shrinkage behaviors of the polyolefin-based porous substrate, the separator having a coating layer of a mixture of inorganic particles and a binder polymer on the surface of the porous substrate has been developed to improve the strength and heat resistance of the separator. For example, such separators may include Safety Reinforced Separators (SRS) and Ceramic Coated Separators (CCS).

Since the inorganic particles in the coating layer act as a spacer to maintain the physical shape of the separator, when exposed to high temperature, the SRS or CCS may suppress the shrinkage of the porous substrate, thereby preventing direct contact between the positive electrode and the negative electrode. Accordingly, the electrode assembly is manufactured by adhering the positive electrode and the negative electrode with the separator having the porous coating layer on two surfaces between the positive electrode and the negative electrode.

Meanwhile, the common type of unit cell of secondary batteries includes cylindrical, prismatic and pouch-type. In the case of cylindrical secondary battery cells, a battery is manufactured by winding a positive electrode and a negative electrode with a separator as an insulator interposed between them to form a jellyroll-type electrode assembly, and placing the electrode assembly in a battery can.

In this instance, due to the volume expansion of the negative electrode during repeated charging and discharging of the battery, the porous coating layer of the separator continuously gets scratched, and eventually the separator is broken, causing an internal short circuit, i.e., impingement. The internal short circuit may cause a fire in the cylindrical battery cell.

In addition, when the porous coating layer of the separator gets scratched, the inorganic particles and/or the binder polymer of the porous coating layer may be adrift as impurities in the battery, causing voltage drop behaviors over the self-discharge rate of the battery.

There is a need for development of separators having porous coating layers to improve heat resistance and ensure friction durability.

### DISCLOSURE

### Technical Problem

The present disclosure is directed to providing a separator capable of solving the above-described problem and an electrode assembly and an electrochemical device including the same.

Specifically, the present disclosure is directed to providing a separator having a porous coating layer stably bonded thereto and improved friction durability, and an electrochemical device, for example, a lithium secondary battery including the separator, in which voltage drop behaviors are minimized.

In particular, the present disclosure is directed to providing a separator substrate in which a high degree of impregnation of a coating layer forming slurry is maintained when forming the porous coating layer on the separator substrate, to improve adhesion strength between the separator substrate and the porous coating layer and surface characteristics such as wear resistance against friction and a method for manufacturing the same.

### Technical Solution

To solve the above-described problem,
according to an aspect of the present disclosure, there is provided a separator substrate of the following embodiments.

The separator substrate according to a first embodiment is,
a porous polymer substrate having a surface roughness (Sa) of from 80 nm to 160 nm on at least one surface.

According to a second embodiment, in the first embodiment,
the surface roughness (Sa) of the porous polymer substrate on two surfaces may be from 85 nm to 150 nm.

According to another aspect of the present disclosure, there is provided a separator of the following embodiments.

The separator according to a third embodiment includes:
the separator substrate according to the first embodiment or the second embodiment; and
a porous coating layer present on at least one of surfaces of the separator substrate having the surface roughness (Sa) of from 80 nm to 160 nm, the porous coating layer including inorganic particles and a binder polymer.

According to a fourth embodiment, in the third embodiment,
an adhesion strength between the separator substrate and the porous coating layer may be 100 gf/15 mm or more.

According to a fifth embodiment, in the third or fourth embodiment,
the adhesion strength between the separator substrate and the porous coating layer may be from 100 gf/15 mm to 300 gf/15 mm.

According to a sixth embodiment, in any one of the third to fifth embodiments,
a friction coefficient of the separator may be 0.25 or more.

According to a seventh embodiment, in any one of the third to sixth embodiments,
the friction coefficient of the separator may be from 0.5 to 1.0.

According to an eighth embodiment, in any one of the third to seventh embodiments,
a puncture strength of the separator may be 450 gf or more.

According to a ninth embodiment, in any one of the third to eighth embodiments,
the puncture strength of the separator may be from 500 gf to 600 gf.

According to another aspect of the present disclosure, there is provided an electrode assembly of the following embodiments.

The electrode assembly according to a tenth embodiment may include:
the separator according to any one of the third to ninth embodiments, and
a positive electrode and a negative electrode, each electrode present on each of two surfaces of the separator.

According to an eleventh embodiment, in the tenth embodiment,
a voltage drop (dOCV) of the electrode assembly within 48 hours may be 2.0 or less.

According to a twelfth embodiment, in the tenth or eleventh embodiment,
the voltage drop (dOCV) of the electrode assembly within 48 hours may be 1.5 or less.

According to another aspect of the present disclosure, there is provided an electrochemical device of the following embodiments.

The electrochemical device according to a thirteenth embodiment includes:
the electrode assembly according to any one of the tenth to twelfth embodiments and a case accommodating the electrode assembly.

According to a fourteenth embodiment, in the thirteenth embodiment,
the case may be a cylindrical case.

According to another aspect of the present disclosure, there is provided a method for manufacturing a separator substrate of the following embodiments.

The method for manufacturing the separator substrate according to a fifteenth embodiment includes:
S1) extruding a polymer slurry to obtain a polymer sheet; and
S2) placing the obtained polymer sheet on a casting roll and cooling the polymer sheet,
wherein the method further includes, between the step S1 and the step S2, placing the polymer sheet under a temperature atmosphere of between 28°C and 45°C.

### Advantageous Effects

The separator substrate according to an embodiment of the present disclosure may improve the degree of impregnation of the coating layer forming slurry when forming the porous coating layer on the separator substrate through the improved surface roughness Sa, thereby improving adhesion strength between the separator substrate and the porous coating layer.

Accordingly, due to the surface characteristics of the separator substrate, wear resistance of the porous coating layer against friction and mechanical properties such as puncture strength may be improved.

Through this, the electrochemical device including the separator using the separator substrate may prevent and/or reduce the breakage of the separator caused by the volume expansion of the electrode, for example, the negative electrode during repeated charging and discharging, and its consequential short circuit of the positive electrode and the negative electrode.

Additionally, the separator having the porous coating layer may improve heat resistance of the electrochemical device and wear resistance of the separator, thereby preventing and/or reducing the formation of impurities in the device during charging and discharging of the electrochemical device, and minimizing the voltage drop of the electrochemical device.

### BRIEF DESCRIPTION OF THE DRAWINGS

FIG. 1 is a diagram of an apparatus for manufacturing a separator substrate according to the related art. The apparatus of FIG. 1 includes an extrusion unit 200 to extrude a polymer sheet and casting rolls 201, 202 to cool the extruded polymer sheet.
FIG. 2 is a diagram of an apparatus for manufacturing a separator substrate according to an embodiment of the present disclosure. The apparatus of FIG. 2 includes a cooling unit 300 between the extrusion unit 200 and the casting rolls 201, 202 to cool one surface of the separator substrate.
FIG. 3 is a diagram of an apparatus for manufacturing a separator substrate according to an embodiment of the present disclosure. The apparatus of FIG. 3 includes the cooling unit 300 between the extrusion unit 200 and the casting rolls 201, 202 to cool two surfaces of the separator substrate.

### BEST MODE

Hereinafter, the present disclosure will be described in detail.

The term "include" or "comprise" when used in this specification, specifies the presence of stated elements, but does not preclude the presence or addition of one or more other elements, unless the contrary appears from the context.

In the specification, "A and/or B" refers to either A or B or both.

The certain terms used in the following description are provided to ease the description but not intended to limit the present disclosure. Additionally, the terms indicating directions such as upper, lower, left, right, front, rear, inner and outer indicate a direction in the drawings to which reference is made, or a direction facing or facing away from the geometric center of the stated devices, systems and elements.

According to an aspect of the present disclosure, there is provided a separator substrate which is a porous polymer substrate having surface roughness Sa of from 30 nm to 160 nm on at least one surface.

### Separator substrate and its manufacturing method

According to an aspect of the present disclosure, there is provided, a separator substrate which is a porous polymer substrate having surface roughness Sa of from 80 nm to 160 nm on at least one surface.

To describe this, a method for manufacturing the separator substrate according to an embodiment of the present disclosure will be described first.

The method for manufacturing the separator substrate according to an aspect of the present disclosure includes:
S1) extruding a polymer slurry to obtain a polymer sheet; and
S2) placing the obtained polymer sheet on a casting roll and cooling it.

In this instance, according to an aspect of the present disclosure, the method further includes the step of placing the polymer sheet under a temperature atmosphere of from 28°C to 45°C between the step S1 and the step S2.

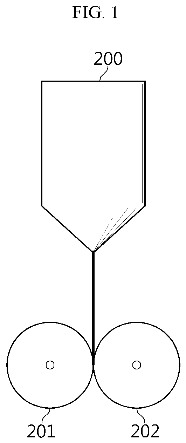

FIG. 1 is a diagram showing parts of an apparatus for manufacturing a separator substrate according to the related art. The apparatus of FIG. 1 includes an extrusion unit 200 to extrude the polymer sheet and casting rolls 201, 202 to transport the polymer sheet for cooling and the subsequent process. In general, the polymer sheet extruded through the extrusion unit is cooled in air while in contact with the casting rolls at high temperature.

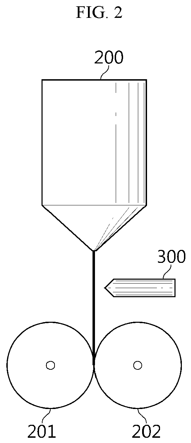

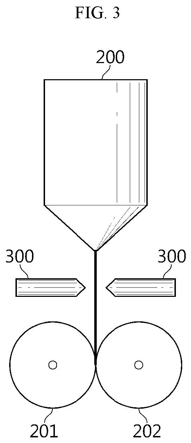

FIGs. 2 and 3 are diagrams showing parts of an apparatus for manufacturing a separator substrate according to an embodiment of the present disclosure. The apparatus of FIGs. 2 and 3 includes a cooling unit 300 to cool down the extruded polymer sheet between the extrusion unit 200 and the casting rolls 201, 202. FIG. 2 shows the cooling unit 300 on one side of the polymer sheet, and FIG. 3 shows the cooling unit 300 on two sides of the polymer sheet.

First, in an embodiment of the present disclosure, the step S1) of extruding the polymer slurry to obtain the polymer sheet may include performing melt extrusion of a polymer resin as a raw material.

In an embodiment of the present disclosure, the polymer resin may include those used as the raw material for manufacturing the separator substrate without limitation. The polymer resin may include any type of resin as the raw material for manufacturing the separator substrate, for example, polyolefin, polyethyleneterephthalate, polybutyleneterephthalate, polyacetal, polyamide, polycarbonate, polyimide, polyetheretherketone, polyethersulfone, polyphenylene oxide, polyphenylene sulfide, polyethylenenaphthalene or a mixture thereof. The polyolefin resin is formed by polymerization of olefin, and refers to a polymer produced from an olefin commonly used in the separator substrate as a monomer. For example, the polyolefin resin may include polyethylene; polypropylene; polybutylene; polypentene; polyhexene; polyoctene; a homopolymer of a monomer selected from ethylene, propylene, butene, pentene, 4-methylpentene, hexene, and octene; a copolymer of two or more of them; or a mixture thereof, but is not limited thereto.

In an embodiment of the present disclosure, the porous polymer substrate may be a polyolefin substrate.

In an embodiment of the present disclosure, the porous polymer substrate may be a polyethylene substrate.

In an embodiment of the present disclosure, the commonly used diluent may be used to extrude the polymer resin fed into an extruder. The diluent may include liquid or solid paraffin oil, wax and soybean oil commonly used to manufacture the separator.

In an embodiment of the present disclosure, for the melting and extrusion, the commonly used single or twin screw extruder may be used, but is not limited thereto. In an embodiment of the present disclosure, a mixture of the diluent and the polymer resin may be fed into the extruder, followed by melting and mixing the polymer resin at high temperature to obtain a molten composition.

In this instance, because the extrusion of the polymer sheet is generally performed at high temperature, for example, from 150°C to 300°C, the polymer sheet extruded through the extrusion unit may have high temperature, for example, surface temperature of from 130°C to 200°C immediately after extrusion, and the polymer sheet having the aforementioned surface temperature contacts the casting rolls. When considering that the temperature of the casting rolls is generally from 20°C to 45°C, from 25°C to 45°C, from 35°C to 45°C, or 25°C, the polymer sheet is cooled quickly through the contact with the casting rolls, failing to form crystals on the surface.

According to an aspect of the present disclosure, before the polymer sheet extruded through the extrusion unit touches the casting rolls, primary cooling may be performed through the cooling unit 300 to induce surface crystallization of the polymer sheet, thereby increasing surface roughness.

In an embodiment of the present disclosure, the cooling unit may be also referred to as a 'cooler unit' to cool down the polymer sheet at high temperature, and the cooling unit may include, for example, a 'air heater' to bring higher temperature than room temperature into contact with the polymer sheet. In an embodiment of the present disclosure, the cooling unit may include a device for applying hot air of from 28°C to 45°C to at least one surface of the polymer sheet.

Conventionally, the porous polymer substrate as the separator substrate was manufactured by extruding the polymer slurry to obtain the polymer sheet, and placing the obtained polymer sheet on the casting rolls to cool it. The inventors discovered that before cooling the polymer sheet, placing the polymer sheet under the atmosphere having the specific temperature induces surface crystallization of the polymer sheet, leading to different surface characteristics. Accordingly, the manufacture of the separator substrate further includes, before cooling, the step of placing the polymer sheet in the specific temperature range to obtain the separator substrate having the surface roughness Sa of from 80 nm to 160 nm by the surface crystallization of the separator substrate.

In an embodiment of the present disclosure, the step of placing the polymer sheet under the temperature atmosphere of from 28°C to 45°C is performed between the step S1 and the step S2. Specifically, the step may be performed at the temperature of from 30°C to 45°C or from 30°C to 40°C. Additionally, within the temperature range, the polymer sheet may be placed in atmospheric pressure air.

In an embodiment of the present disclosure, the additional step may be performed in a successive manner with the steps S1 and S2 through the apparatus for manufacturing the separator substrate further including 'the cooling unit 300' between the step S1 and the step S2.

In an embodiment of the present disclosure, between the step S1 and the step S2, the speed at which the polymer sheet travels in the temperature range of between 28°C and 45°C may be, for example, from 5 m/min to 20 m/min, specifically from 5 m/min to 15 m/min, or 10 m/min. However, the speed may vary depending on the speed of the entire process without departing from the range of surface roughness of the separator substrate, and the present disclosure is not limited thereto.

When the polymer sheet is placed in the aforementioned temperature range before the cooling of step S2, the surface roughness Sa may be from 80 nm to 160 nm. Additionally, when the temperature is too high, the surface roughness of the separator substrate may decrease, resulting in low adhesion strength between the separator substrate and the porous coating layer, and when the temperature is too low, the surface roughness of the separator substrate may increase, resulting in high adhesion strength between the separator substrate and the porous coating layer beyond the optimum level, and poor shock resistance on the surface of the separator, but the present disclosure is not limited thereto.

In an embodiment of the present disclosure, the method for manufacturing the separator substrate may further include, after the cooling of step S2, the step S3) of stretching and heat-setting the polymer sheet formed through the casting rolls.

In an embodiment of the present disclosure, the stretching may include stretching the polymer sheet in the same direction or different directions. For example, the stretching may include stretching the polymer sheet in a direction parallel to independently each of machine direction (MD) and/or transverse direction (TD).

The 'machine direction' as used herein refers to a direction parallel to a travel direction of [extrusion->forming->stretching...] in the process of manufacturing the separator substrate. The machine direction can be identified through fiber orientation in the polymer of the separator substrate, and a direction parallel to fiber orientation is the machine direction. Accordingly, the 'transverse direction' refers to a direction perpendicular to the machine direction. The transverse direction can be identified as a direction perpendicular to fiber orientation in the polymer of the separator substrate.

In an embodiment of the present disclosure, the stretching may be performed by, for example, roll type, tenter type sequential or simultaneous stretching.

In an embodiment of the present disclosure, the stretching may be each, for example, performed at a stretch ratio of 3 times or more, or from 5 times to 12 times or from 6 times to 7 times. When the stretch ratio satisfies the aforementioned numerical range, this may have a beneficial effect on thickness uniformity of the manufactured separator substrate and balanced properties between machine direction and transverse direction, but the present disclosure is not limited thereto.

In an embodiment of the present disclosure, the method may include, after the stretching, extracting the diluent from the stretched sheet to form pores and heat-setting.

In an embodiment of the present disclosure, the extraction of the diluent may be performed using an organic solvent. The organic solvent may include high extraction efficiency and fast-drying solvents, and may suitably include, for example, methyl ethyl ketone, methylene chloride, hexane or a mixture thereof, but the present disclosure is not limited thereto.

In an embodiment of the present disclosure, the temperature at which the extraction is performed is not limited to a particular range and may include a temperature range in which the surface roughness of the porous substrate does not change.

In an embodiment of the present disclosure, after the stretching and the extraction of the diluent, the heat-setting may be performed to forcibly hold the porous sheet and remove the residual stress in the sheet. However, the purpose of the heat-setting is not limited thereto.

In an embodiment of the present disclosure, the heat-setting temperature may vary depending on the type of the polymer resin used to manufacture the separator substrate. The heat-setting temperature may be, for example, from 100°C to 180°C, specifically from 110°C to 150°C, more specifically from 120°C to 140°C, for example, 130°C, but the present disclosure is not limited thereto.

In an embodiment of the present disclosure, in the heat-setting process, heat may be applied while monoaxially stretching in MD or TD direction, or heat may be applied while biaxially stretching in MD and TD direction, but is not limited thereto.

According to an embodiment of the present disclosure, there may be provided the separator substrate having the surface roughness Sa of from 80 nm to 160 nm on two surfaces of the porous polymer substrate.

According to an embodiment of the present disclosure, the surface roughness Sa of at least one surface of the porous polymer substrate may be from 85 nm to 150 nm. Additionally, the surface roughness Sa of at least two surfaces of the porous polymer substrate may be from 85 nm to 150 nm.

According to an embodiment of the present disclosure, the surface roughness Sa on at least one surface of the porous polymer substrate may be from 90 nm to 140 nm.

According to an embodiment of the present disclosure, when the surface roughness Sa of at least one surface of the porous polymer substrate is in the aforementioned range, this may have a beneficial effect on adhesion strength between the separator substrate and the porous coating layer, and wear resistance and shock resistance of the porous coating layer when forming the porous coating layer, but the effect of the present disclosure is not limited thereto.

Meanwhile, in addition to Sa measurement, the method for measuring the surface roughness of the separator substrate may include known methods for 2-dimensional (2D) direction surface roughness measurement such as Ra (Center line average roughness), Rmax (Maximum peak to valley roughness height), Rz (Ten Point Height) and Rg (Root Mean Square (RMS)). However, Ra, Rmax, Rz and Rg are a measure of 2D (line direction) surface roughness, but cannot identify surface roughness morphology. That is, two different surfaces may have the same value of at least one of Ra, Rmax, Rz or Rg, but different 3D roughness morphologies, and as a consequence, the impregnation amount of the slurry for forming the porous coating layer or the shape of the porous coating layer may change, and the adhesion strength between the separator substrate and the porous coating layer and the mechanical strength of the porous coating layer may change. Considering this, the present disclosure defines the surface roughness of the separator substrate through Sa.

In an embodiment of the present disclosure, the surface roughness Sa may be measured through surface analysis of the porous polymer substrate using atomic force microscopy (AFM). For example, a sample of size 30 *µ*m X 30 *µ*m was obtained from the porous polymer substrate of which surface roughness is to be measured, and surface characteristics of each of two surfaces are measured. In this instance, the surface roughness Sa is measured through analysis of an average height difference across a surface for the average surface.

Hereinafter, configuration of the porous polymer substrate will be described by way of example. However, the porous substrate is not limited to the components described below.

In an embodiment of the present disclosure, the porous polymer substrate is a porous ion-conducting barrier that prevents electrical contact between the negative electrode and the positive electrode and allows ions to pass through and refers to a substrate having pores therein. The pores are connected to each other to allow gases or liquids to pass from one side of the substrate to the other side.

In an embodiment of the present disclosure, the porous polymer substrate may include a porous polymer film including a thermoplastic resin to provide a shut-down function. Here, the shut-down function refers to a function in which when the battery temperature is high, the thermoplastic resin melts to block the pores of the porous polymer substrate and stop ion migration, thereby preventing thermal runaway in the battery.

In an embodiment of the present disclosure, the thickness of the porous polymer substrate is not limited to a particular range, but may include the aforementioned range of thickness based on the total thickness of the separator, for example, from 5 *µ*m to 300 *µ*m, specifically from 5 *µ*m to 100 *µ*m, from 5 *µ*m to 50 *µ*m, from 5 *µ*m to 20 *µ*m, from 5 *µ*m to 15 *µ*m or from 9 to 12 *µ*m.

In an embodiment of the present disclosure, the "thickness" of the porous polymer substrate may be measured by the commonly used method for measuring the thickness of each component of the separator. For example, the thickness of the porous polymer substrate may be measured using the commonly used thickness measuring instrument, for example, the commercially available thickness measuring instrument (Mitutoyo, VL-50S-B).

### Separator

According to an aspect of the present disclosure, there is provided a separator including the above-described porous polymer substrate as a separator substrate and a porous coating layer formed on at least one surface of the separator substrate and including inorganic particles and a binder polymer. In this instance, the porous coating layer may be formed on at least one of the surfaces of the separator substrate having the surface roughness Sa of from 30 nm to 160 nm.

According to another aspect of the present disclosure, there is provided a separator including the above-described porous polymer substrate as a separator substrate and a porous coating layer formed on at least one surface of the separator substrate and including inorganic particles and a binder polymer. In this instance, the porous coating layer is formed on at least one of the surfaces of the separator substrate having the surface roughness Sa of from 80 nm to 160 nm.

The porous coating layer includes the inorganic particles to improve safety of the separator and the binder polymer to hold the inorganic particles together. The inorganic particles may improve heat resistance of the separator, and the binder polymer may give adhesion strength to the separator surface. In this instance, when the surface of the separator substrate on which the porous coating layer is formed is flat, the adhesion strength at the interface between the separator substrate and the porous coating layer may be low. However, when the surface of the separator substrate is too rough, the adhesion strength at the interface between the separator substrate and the porous coating layer is very high, and the amount of binder at the interface between the separator substrate and the porous coating layer increases compared to that of the surface of the porous coating layer, resulting in poor shock resistance on the surface of the porous coating layer and low mechanical properties of the separator. Accordingly, the separator having the porous coating layer on the separator substrate according to an aspect of the present disclosure may achieve the predetermined level of surface roughness, leading to good adhesion strength between the separator substrate and the porous coating layer and improved wear resistance and shock resistance of the separator.

In an embodiment of the present disclosure, the separator may be characterized in that the adhesion strength between the surface of the separator substrate having the surface roughness Sa of from 80 nm to 160 nm, specifically from 85 nm to 150 nm and the porous coating layer is 30 gf/15 mm or more. Specifically, the adhesion strength between the surface of the separator substrate having the aforementioned range of surface roughness Sa and the porous coating layer may be from 50 gf/15 mm to 300 gf/15 mm, from 100 gf/15 mm to 300 gf/15 mm, from 150 gf/15 mm to 300 gf/15 mm or from 195 gf/15 mm to 284 gf/15 mm. When the adhesion strength between the separator substrate and the porous coating layer of the separator is in the aforementioned range, this may have a beneficial effect on process performance of manufacturing an electrode assembly using the separator and stability of the separator.

The adhesion strength of the separator may be, for example, measured by the following method. Sample the separator of which adhesion strength is to be measured into a width of 15 mm, and attach a target surface for adhesion strength measurement to a slide glass using a 18 mm-wide double-sided tape (3M) to bring them into contact with each other. Subsequently, the peel strength between the separator substrate and the porous coating layer is measured using UTM machine (Instron) in the conditions of 180°, 300 mm/min.

Additionally, in an embodiment of the present disclosure, the separator may be characterized in that the friction coefficient is 0.25 or more. In the specification, the 'friction coefficient' refers to friction coefficient when the separator substrate is exposed to the surface as a result of delamination of the porous coating layer due to breakage or damage by friction applied to the separator. When the surface roughness Sa of the separator substrate is in the aforementioned range, the degree of impregnation of the slurry for forming the porous coating layer on the separator substrate may increase, the adhesion strength between the separator substrate and the porous coating layer may increase, and the force required to delaminate the separator substrate and the porous coating layer by friction may increase, and the friction coefficient may increase.

According to an embodiment of the present disclosure, the friction coefficient of the separator may be 0.25 or more. Specifically, the friction coefficient of the separator may be from 0.5 to 1.0, from 0.50 to 0.85, from 0.60 to 0.80 or from 0.64 to 0.78.

The friction coefficient of the separator may be, for example, measured using the commonly used friction and wear tester. Specifically, the friction coefficient of the separator may be, for example, measured by measuring the friction coefficient at the time the porous coating layer is delaminated by the application of repeated friction with 5g/Dia tip using Heidon friction and wear tester.

Additionally, in an embodiment of the present disclosure, the separator may be characterized in that the puncture strength is 450 gf or more. In the specification, the 'puncture strength' is a measure of resistance of the separator against an applied normal force. When the surface roughness Sa of the separator substrate is in the aforementioned range, the degree of impregnation of the slurry for forming the porous coating layer on the separator substrate may increase, the adhesion strength between the separator substrate and the porous coating layer may increase and the mechanical strength of the separator substrate may improve. In contrast, when the surface roughness of the separator substrate is too high, the interior of the separator substrate may be poorly formed, resulting in low mechanical strength and poor puncture strength, but the present disclosure is not limited thereto.

According to an embodiment of the present disclosure, the puncture strength of the separator may be 450 gf or more. Specifically, the puncture strength of the separator may be from 450 gf to 650 gf, from 500 gf to 600 gf, from 530 gf to 590 gf or from 566 gf to 589 gf.

The puncture strength of the separator may be, for example, measured by the commonly used method for measuring the puncture strength. Specifically, the puncture strength of the separator may be, for example, measured by measuring a force when the separator is pierced by the application of force to the separator in the conditions of 1 mm tip and 120 mm/min using Instron UTM machine.

Hereinafter, configuration of the porous coating layer will be described by way of example. However, the configuration of the porous coating layer is not limited thereto.

In an embodiment of the present disclosure, the porous coating layer may include the inorganic particles and the binder polymer, and all or at least part of the surface of the inorganic particles may be coated by the binder polymer. In this instance, the inorganic particles are held together surface-to-surface and/or point-to-point by the medium of the binder polymer.

For example, the inorganic particles and the binder resin in the porous coating layer may be included at a weight ratio of from 95:5 to 50:50. Specifically, the inorganic particles and the binder resin in the porous coating layer may be included at the weight ratio of from 99:1 to 50:50, from 95:5 to 50:50, from 95:5 to 70:30, from 95:5 to 80:20, or from 95:5 to 90:10, but the present disclosure is not limited thereto. The porous coating layer has a plurality of micropores which are connected to each other, and has a structural feature of a porous layer that allows gases or liquids to pass from one side to the other side.

In an embodiment of the present disclosure, the porous coating layer may have a pore structure formed from pores or voids (interstitial volume) between the inorganic particles. The pore size or porosity (the ratio of pore volume) may be adjusted according to the particle size and particle size distribution. Through this structure, it is possible to increase the resistance to metallic impurities present in the electrode and suppress shrinkage of the porous polymer substrate, thereby enhancing safety of the electrochemical device.

In an embodiment of the present disclosure, the porous coating layer may include a plurality of nodes including the inorganic particles and the binder polymer that covers at least part of the surface of the inorganic particles; and at least one filament formed in the shape of thread from the binder polymer of the nodes, wherein the filament has a node connection part that extends from the node and connects the node to another node, and the node connection part has a 3D network structure formed by interconnection of the filaments originating from the binder polymer.

In an embodiment of the present disclosure, as described above, the porous coating layer may be formed through a Safety Reinforced Separator (SRS) manufacturing method, a Ceramic Coated Separator (CCS) manufacturing method, or any other known manufacturing method, but is not limited thereto.

In an embodiment of the present disclosure, the inorganic particles are not limited to a particular type and may include any type of inorganic particles that are electrochemically stable. That is, the inorganic particles that may be used in the present disclosure are not limited to a particular type and may include any type of inorganic particles in which oxidation and/or reduction reaction does not occur in the operating voltage range (*e.g.,* 0 to 5V vs Li/Li⁺) of the electrochemical device applied. Non-limiting examples of the inorganic particles may include at least one of BaTiO₃, Pb(Zr,Ti)O₃ (PZT), Pb₁₋ₓLaₓZr_{1-y}Ti_{y}O₃ (PLZT, 0<x<1, 0<y<1), Pb(Mg_{1/3}Nb_{2/3})O₃-PbTiO₃ (PMN-PT), hafnia (HfO₂), SrTiO₃, SnO₂, CeO₂, MgO, NiO, CaO, ZnO, ZrO₂, SiO₂, Y₂O₃, Al₂O₃, SiC or TiO₂.

In an embodiment of the present disclosure, the average particle size (D₅₀) of the inorganic particles may be, for example, 100 nm or more. Specifically, the average particle size (D₅₀) of the inorganic particles may be from 100 nm to 1 *µ*m, or from 100 nm to 500 nm. When the average particle size of the inorganic particles is in the aforementioned range, this may have a beneficial effect on suppressing the resistance rise of the separator, but the present disclosure is not limited thereto.

The particle size of the inorganic particles may be measured by the commonly used method for measuring particle size, and may be, for example, measured using Malvern Particle Size Analyzer (PSA). Additionally, the average particle size (D₅₀) refers to a particle size at 50% of cumulative particle size distribution, and may be measured through a laser diffraction method commonly used in the technical field. In this instance, the laser diffraction particle size measuring instrument may include, for example, Microtrac S3500.

In an embodiment of the present disclosure, the binder resin may include, for example, polyvinylidene fluoride-based resin (PVdF-based resin) and/or acrylic binder. In an embodiment of the present disclosure, the PVdF-based resin may include at least one of vinylidene fluoride homopolymer (i.e., polyvinylidene fluoride), copolymers of vinylidene fluoride with copolymerizable monomers or a mixture thereof. In an embodiment of the present disclosure, the monomer may include, for example, fluorinated monomers and/or chlorine-based monomers. Non-limiting examples of the fluorinated monomers may include at least one of vinyl fluoride; trifluoroethylene (TrFE); chlorofluoroethylene (CTFE); 1,2-difluoroethylene; tetrafluoroethylene (TFE); hexafluoropropylene (HFP); perfluoro(alkylvinyl)ether such as perfluoro(methylvinyl)ether (PMVE), perfluoro(ethylvinyl)ether(PEVE) and perfluoro(propylvinyl)ether (PPVE); perfluoro(1,3-dioxole); or perfluoro(2,2-dimethyl-1,3-dioxole) (PDD). The acrylic binder may include, for example, polyacrylic acid (PA), polyacrylonitrile (PAN), polyacrylamide (PAA), or (meth)acrylic polymer or a mixture thereof, but the present disclosure is not limited thereto. The (meth)acrylic polymer refers to a polymer including (meth)acylic acid ester as a monomer. The monomer may include, for example, butyl (meth)acrylate, 2-ethylhexyl (meth)acrylate, ethyl (meth)acrylate, methyl (meth)acrylate, n-propyl (meth)acrylate, isopropyl (meth)acrylate, t-butyl (meth)acrylate, pentyl (meth)acrylate, n-hexyl (meth)acrylate, isooctyl (meth)acrylate, isononyl (meth)acrylate, lauryl (meth)acrylate, tetradecyl (meth)acrylate or a mixture thereof, but the present disclosure is not limited thereto.

In an embodiment of the present disclosure, the porous coating layer is not limited to a particular thickness but so long as it satisfies the aforementioned ratio range to the total thickness of the separator, the thickness of the porous coating layer may be, for example, from 0.5 *µ*m to 50 *µ*m, specifically from 0.5 *µ*m to 10 *µ*m, from 0.5 *µ*m to 5 *µ*m or from 1.5 *µ*m to 3 *µ*m.

### Electrode assembly

According to another aspect of the present disclosure, there is provided an electrode assembly including the above-described separator, and a positive electrode and a negative electrode, each formed on each of two surfaces of the separator.

As described above, because of including the porous coating layer, the separator according to an aspect of the present disclosure may have improved heat resistance, high adhesion strength between the separator substrate and the porous coating layer, and improved shock resistance attributed to the improved wear resistance of the porous coating layer and good mechanical properties of the separator substrate. The electrode assembly using the same may prevent or delay the voltage drop, thereby effectively solving the low voltage problem caused by the breakage of the separator.

In an embodiment of the present disclosure, the electrode assembly has little or no voltage drop in 200 repeated cycles of charging and discharging.

For example, the electrode assembly may exhibit the voltage drop (dOCV) of 2.0 or less within 48 hours, and for example, the electrode assembly may exhibit the voltage drop of 2.0 or less within 48 hours after 200 charge and discharge cycles. Additionally, the electrode assembly may exhibit the voltage drop of 1.5 or less within 48 hours, specifically the voltage drop of 1.5 or less within 48 hours after 200 charge and discharge cycles. More specifically, the electrode assembly may exhibit the voltage drop of 1.0 or less within 48 hours, specifically the voltage drop of 1.0 or less within 48 hours after 200 charge and discharge cycles. For example, the electrode assembly may exhibit the voltage drop of from 0.1 to 1.0, from 0.1 to 0.8, from 0.3 to 0.8, from 0.3 to 0.7 or from 0.4 to 0.6 within 48 hours.

In an embodiment of the present disclosure, the voltage drop may be measured by calculating a difference between OCV measured at the reference time (t₀) and OCV measured after 48 hours (t₄₈). Specifically, the OCV of the electrode assembly is measured by measuring the voltage drop for 48 hours after charging to SOC 60% set as the ending point.

In an embodiment of the present disclosure, when the separator using the separator substrate is applied, the improved wear resistance of the separator may have a beneficial effect on providing an electrochemical device having good safety and life characteristics of the battery.

Hereinafter, configuration of the electrode will be described by way of example. However, the present disclosure is not limited thereto.

In an embodiment of the present disclosure, each of the positive electrode and the negative electrode may include a current collector and a coating of electrode active material on the current collector, and is not limited to a particular size or shape.

In an embodiment of the present disclosure, the positive electrode active material may include, for example, lithium transition metal oxide; lithium metal iron phosphate; lithium nickel-manganese-cobalt oxide; oxide with partial substitution of other transition metal in lithium nickel-manganese-cobalt oxide; or two or more of them, but is not limited thereto. Specifically, the positive electrode active material may include, for example, layered compounds such as lithium cobalt oxide (LiCoO₂), lithium nickel oxide (LiNiO₂) or compounds substituted with one or more transition metals; lithium manganese oxide of formula Li₁₊ₓMn₂₋ₓO₄ (where x is 0 to 0.33), LiMnO₃, LiMn₂O₃, LiMnO₂; lithium copper oxide (Li₂CuO₂); vanadium oxide such as LiV₃O₈, LiV₃O₄, V₂O₅, Cu₂V₂O₇; Ni site lithium nickel oxide represented by formula LiNi₁₋ₓMₓO₂ (where M = Co, Mn, Al, Cu, Fe, Mg, B or Ga, x = 0.01 to 0.3); lithium manganese composite oxide represented by formula LiMn₂₋ₓMₓO₂ (where M = Co, Ni, Fe, Cr, Zn or Ta, x = 0.01 to 0.1) or Li₂Mn₃MO₈ (where M = Fe, Co, Ni, Cu or Zn); lithium metal phosphate LiMPO₄ (where M = Fe, Co, Ni, or Mn); lithium nickel-manganese-cobalt oxideLi₁₊ₓ(NiₐCo_{b}Mn_{c})₁₋ₓO₂ (x = 0 to 0.03, a = 0.3 to 0.95, b = 0.01 to 0.35, c = 0.01 to 0.5, a+b+c=1); oxide Liₐ[Ni_{b}Co_{c}Mn_{d}Alₑ]_{1-f}M1_{f}O₂ with partial substitution of aluminum in lithium nickel-manganese-cobalt oxide (M1 is at least one selected from the group consisting of Zr, B, W, Mg, Ce, Hf, Ta, La, Ti, Sr, Ba, F, P and S, 0.8≤a≤1.2, 0.5≤b≤0.99, 0<c<0.5, 0<d<0.5, 0.01≤e≤0.1, 0≤f≤0.1); oxide Li₁₊ₓ(NiₐCo_{b}Mn_{c}M_{d})₁₋ₓO₂ with partial substitution of other transition metal in lithium nickel-manganese-cobalt oxide (x = 0 to 0.03, a = 0.3 to 0.95, b = 0.01 to 0.35, c = 0.01 to 0.5, d = 0.001 to 0.03, a+b+c+d=1, M is any one selected from the group consisting of Fe, V, Cr, Ti, W, Ta, Mg and Mo), disulfide compounds; Fe₂(MoO₄)₃, but is not limited thereto.

In an embodiment of the present disclosure, the negative electrode active material may include, for example, lithium metals or lithium alloys, soft carbon, hard carbon, natural graphite, Kish graphite, pyrolytic carbon, mesophase pitch based carbon fiber, meso-carbon microbeads, mesophase pitches, petroleum or coal tar pitch derived cokes, silicon (Si)-based compounds (M-SiOx (M=Li, Mg, Ca, Al or Ti, 0≤x<2)) or a mixture thereof, but is not limited thereto.

In an embodiment of the present disclosure, the electrode assembly may be a jellyroll-type electrode assembly having a structure in which a first electrode plate and a second electrode plate having a sheet shape are wound in a direction with a separator interposed between them. In this instance, the separator may be the above-described separator, and the first electrode plate and the second electrode plate may be a positive electrode plate and a negative electrode plate, respectively.

### Electrochemical device

According to another aspect of the present disclosure, there may be provided an electrochemical device including the above-described electrode assembly and a case accommodating the electrode assembly.

In an embodiment of the present disclosure, the electrochemical device may include, for example, a primary battery, a secondary battery, a super capacitor, and an electric double layer capacitor. The secondary battery may be, more specifically, a lithium ion secondary battery.

In an embodiment of the present disclosure, the case may include any commonly used battery case, and is not limited to a particular shape according to the use of the battery. For example, the case may have a cylindrical, prismatic, pouch or coin shape using a can.

In an embodiment of the present disclosure, the case may be a cylindrical case, and the electrochemical device may be a cylindrical battery.

In an embodiment of the present disclosure, the cylindrical battery includes a jellyroll-type electrode assembly including a positive electrode plate and a negative electrode plate wound in a direction with a separator interposed between the positive electrode plate and the negative electrode plate; a battery can accommodating the electrode assembly; and a sealing body to seal an open end portion of the battery can, wherein the separator is the above-described separator.

In an embodiment of the present disclosure, the cylindrical battery may be a large-scale cylindrical battery cell having a ratio of form factor (defined as a value obtained by dividing the diameter of the cylindrical battery by its height, i.e., a ratio of diameter Φ to height H) of 0.4 or more.

In an embodiment of the present disclosure, the cylindrical battery may be, for example, 46110 cell (diameter 46 mm, height 110 mm, form factor ratio 0.418), 48750 cell (diameter 48 mm, height 75 mm, form factor ratio 0.640), 48110 cell (diameter 48 mm, height 110 mm, form factor ratio 0.418), 48800 cell (diameter 48 mm, height 80 mm, form factor ratio 0.600) or 46800 cell (diameter 46 mm, height 80 mm, form factor ratio 0.575). In the numbers indicating the form factor, the former two numbers indicate the diameter of the cell, the next two numbers indicate the height of the cell, and the last number 0 indicates that the cross section of the cell is circular.

When the electrode assembly is completed as described above, the electrode assembly may be received in the case and the case may be sealed according to the commonly used method to manufacture the electrochemical device, and in this instance, the electrochemical device may be, for example, a lithium secondary battery.

Hereinafter, the present disclosure will be described in more detail through examples, but the following examples are provided for illustration purposes, and the scope of the present disclosure is not limited thereto.

### [Manufacture of separator substrate]

A porous polymer substrate was manufactured by the following method.

A polyethylene polymer having the molecular weight of 600,000 (g/mol) and an antioxidant agent were mixed in an extruder, followed by melting in the temperature condition of 200°C and extrusion through a T-die, and the obtained polymer sheet was placed to allow it to go through the temperature range described in the following TABLE 1 before cooling through casting rolls having the surface temperature of 25°C and made of stainless steel, and then cooled. In this instance, the rate of travel across the temperature range was 10 m/min. Subsequently, the polymer sheet having passed through the casting rolls was stretched in MD direction (stretch ratio 7 times, stretching temperature 115°C) and TD direction (stretch ratio 6 times, stretching temperature 125°C) using a tenter type sequential stretching machine at the rear of the casting rolls, and the diluent was extracted using methylene chloride, followed by heat-setting in MD and TD direction at the temperature of 130°C, to obtain a porous polymer substrate. The thickness of the obtained porous polymer substrate was 9 *µ*m, and porosity was 45 vol%.

**[TABLE 1]**

| Classification | Temperature range before cooling (°C) |
|---|---|
| Comparative Example 1 | 50 |
| Example 1 | 40 |
| Example 2 | 30 |
| Comparative Example 2 | 20 |

### [Manufacture of separator]

Using each of the as-prepared porous polymer substrates of Comparative Examples 1 and 2 and Examples 1 and 2 as a separator substrate, a separator was manufactured by forming a porous coating layer on two surfaces of the separator substrate by the following method.

### Preparation of porous coating layer

A PAA (MW 350,000 g/mol) binder and inorganic particles (Al₂O₃) were mixed at a weight ratio of 5:95 in an aqueous solvent to prepare a slurry for coating. The as-prepared slurry for inorganic coating was applied to the entire surface of the porous substrate by a bar coating method, and dried to form a porous coating layer to a thickness of 1.5 *µ*m on each of the upper surface and the lower surface of the porous substrate.

Accordingly, a separator having the total thickness of 12 *µ*m was manufactured.

### [Manufacture of electrode assembly]

Each of the as-prepared separators was used as a separator, a negative electrode and a positive electrode were prepared as follows and each was attached to one surface of the separator to manufacture an electrode assembly.

### Manufacture of negative electrode

An active material (Graphite), a binder polymer (SBR) and a conductive material (Super P) were mixed at a weight ratio of 95:0.5:4.5 in distilled water to prepare a negative electrode composition.

The negative electrode composition was applied to one surface of a copper current collector and dried to prepare a negative electrode. The loading amount of the negative electrode was 5.3 mAh/cm².

### Manufacture of positive electrode

An active material (NCMA), a binder polymer (PVDF) and a conductive material (CNT) were mixed at a weight ratio of 97:1:2 in a solvent (NMP) to prepare a positive electrode composition.

The positive electrode composition was applied to one surface of an aluminum current collector and dried to prepare a positive electrode. The loading amount of the positive electrode was 4.949 mAh/cm².

### Assembling of electrode assembly

The positive electrode/the separator/the negative electrode/the separator prepared as described above were stacked in a sequential order and wound around the core to manufacture a jellyroll-type electrode assembly.

### [Evaluation of properties]

For each of the separator substrate, the separator and the electrode assembly in the manufacturing order, properties were evaluated by the following method and the results are shown in TABLE 2 below.

In the following TABLE 2, the adhesion strength of the separator refers to adhesion strength between the surface on which surface roughness was measured and the porous coating layer.

### Measurement of surface roughness Sa of separator substrate

Surface analysis of the porous polymer substrate was performed using atomic force microscopy (AFM) to obtain a height map of surface and surface roughness Sa was measured by analysis of an average height difference across a surface for the average surface.

The surface roughness measurement was performed on two surfaces of the separator substrate.

### Measurement of adhesion strength of separator

The separator was sampled into a width of 15 mm and a target surface for adhesion strength measurement was attached to a slide glass using a 18 mm-wide double-sided tape (3M) to bring them into contact with each other. Subsequently, peel strength between the separator substrate and the porous coating layer was measured using UTM machine (Instron) in the conditions of 180°, 300 mm/min.

The adhesion strength measurement was performed on two surfaces of the separator.

### Measurement of friction coefficient of separator

The friction coefficient was measured at the time the porous coating layer was delaminated by the application of repeated friction to the separator with 5g/Dia tip using Heidon friction and wear tester.

### Measurement of puncture strength of separator

A force at the time the separator was pierced by the application of force to the separator in the conditions of 1 mm tip and 120 mm/min using Instron UTM machine.

### Measurement of self-discharge

The self-discharge characteristics of the separator were evaluated by the following method.

The as-prepared jellyroll-type electrode assembly was received in a cylindrical case and an electrolyte solution (DME/DOL 1: 1 v/v, 1M LiFSI) was injected to manufacture a cylindrical battery.

Subsequently, SOC 60% was set through charging, and voltage drop was measured for 48 hours.

**[TABLE 2]**

| | Separator substrate | Separator | | | Electrode assembly |
|---|---|---|---|---|---|
| | Sa (nm) | Adhesion strength (gf/15mm) | Friction coefficient | Puncture strength (gf) | Voltage drop (mV) (dOCV/2day) |
| Comparative Example 1 | 64.3 | 51 | 0.21 | 651 | 2.2 |
| Example 1 | 90.1 | 195 | 0.64 | 589 | 0.6 |
| Example 2 | 138.4 | 284 | 0.78 | 566 | 0.4 |
| Comparative Example 2 | 163.6 | Over load | 0.89 | 402 | 0.3 |

As can be seen from TABLE 1 and TABLE 2 above, the porous polymer substrate obtained by placing the separator substrate in the temperature range of between 25°C and 45°C before cooling, followed by cooling in the manufacture of the separator substrate had the surface roughness Sa of from 80 nm to 160 nm, and through this, it was confirmed that the porous polymer substrate had the optimal level of adhesion strength and high wear resistance. Moreover, it was confirmed that it was possible to minimize the voltage drop (low voltage) by self-discharge of the electrode assembly using the same.

In contrast, it was confirmed that the porous polymer substrate as the separator substrate obtained by placing in the temperature range outside of the aforementioned range before cooling, followed by cooling had the surface roughness Sa outside of the range between 80 nm and 160 nm. In particular, in the case of Comparative Example 1 having the surface roughness Sa of less than 80 nm, it was confirmed that the adhesion strength between the separator substrate and the porous coating layer was low, and the mechanical strength such as wear resistance, and voltage drop of the electrode assembly using the same was observed, and in the case of Comparative Example 2 having the surface roughness Sa of more than 160 nm, adhesion strength was very high and poor properties were found in terms of shock resistance of the separator.

### [List of Reference Numerals]

200 -Extrusion unit
201, 202 - Casting roll
300 - Cooling unit

## Claims

1. A separator substrate which is a porous polymer substrate having a surface roughness (Sa) of from 80 nm to 160 nm on at least one surface.

2. The separator substrate according to claim 1, wherein the surface roughness (Sa) of the porous polymer substrate on two surfaces is from 85 nm to 150 nm.

3. A separator comprising:
the separator substrate according to claim 1; and
a porous coating layer present on at least one of surfaces of the separator substrate having the surface roughness (Sa) of from 80 nm to 160 nm, the porous coating layer including inorganic particles and a binder polymer.

4. The separator according to claim 3, wherein an adhesion strength between the separator substrate and the porous coating layer is 100 gf/15 mm or more.

5. The separator according to claim 4, wherein the adhesion strength between the separator substrate and the porous coating layer is from 100 gf/15 mm to 300 gf/15 mm.

6. The separator according to claim 3, wherein a friction coefficient of the separator is 0.25 or more.

7. The separator according to claim 6, wherein the friction coefficient of the separator is from 0.5 to 1.0.

8. The separator according to claim 3, wherein a puncture strength of the separator is 450 gf or more.

9. The separator according to claim 8, wherein the puncture strength of the separator is from 500 gf to 600 gf.

10. An electrode assembly comprising:
the separator according to any one of claims 3 to 9; and
a positive electrode and a negative electrode, each electrode present on each of two surfaces of the separator.

11. The electrode assembly according to claim 10, wherein a voltage drop (dOCV) of the electrode assembly within 48 hours is 2.0 or less.

12. The electrode assembly according to claim 11, wherein the voltage drop (dOCV) of the electrode assembly within 48 hours is 1.5 or less.

13. An electrochemical device comprising:
the electrode assembly according to claim 10; and
a case accommodating the electrode assembly.

14. The electrochemical device according to claim 13, wherein the case is a cylindrical case.

15. A method for preparing a separator substrate, comprising:
S1) extruding a polymer slurry to obtain a polymer sheet; and
S2) placing the obtained polymer sheet on a casting roll and cooling the polymer sheet,
wherein the method further comprises:
between the step S1 and the step S2,
placing the polymer sheet under a temperature atmosphere of between 28°C and 45°C.
